# DEMANDE DE BREVET EUROPEEN

(11) **EP 0 724 316 A1**
(43) Date de publication de la demande: **31.07.1996**
(21) Numéro de dépôt: 96400141.6
(22) Date de dépôt: 22.01.1996
(51) Int. Cl.: H01S 3/06, H01S 3/08

(54) **Microlaser solide monolithique à déclenchement actif par tension de commande faible**

(30) Priorité: 24.01.1995 FR 9500767
(71) Demandeur: COMMISSARIAT A L'ENERGIE ATOMIQUE, 75015 Paris (FR)
(72) Inventeur: Molva, Engin, F-38000 Grenoble (FR); Thony, Philippe, F-38000 Grenoble (FR); Rabarot, Marc, F-38170 Seyssinet (FR)
(74) Mandataire: Dubois-Chabert, Guy

(57) **Abrégé**

Microlaser comportant un milieu constitué d'un matériau actif laser, formant une première cavité résonnante entre un miroir d'entrée et un miroir intermédiaire, un second matériau formant une seconde cavité résonnante entre le miroir intermédiaire et un miroir de sortie, caractérisé en ce que des moyens de réduction du faisceau laser sont disposés en entrée de la première cavité résonante, l'ensemble des deux cavités et des moyens de réduction du faisceau laser étant monolithiques.

## Description

### Domaine technique

L'invention se rapporte au domaine des microlasers solides déclenchés activement.

L'avantage principal du microlaser réside dans sa structure en un empilement de multicouches, qui est sa caractéristique essentielle. Le milieu actif laser est constitué par un matériau de faible épaisseur entre 150-1000 µm et de petites dimensions (quelques mm²), sur lequel des miroirs diélectriques de cavité sont directement déposés. Ce milieu actif peut être pompé par une diode laser III-V qui est soit directement hybridée sur le microlaser, soit couplée à ce dernier par fibre optique. La possibilité d'une fabrication collective utilisant les moyens de la microélectronique autorise une production de masse de ces microlasers à très faible coût.

Les microlasers ont de nombreuses applications, dans des domaines aussi variés que l'industrie automobile, l'environnement, l'instrumentation scientifique, la télémétrie.

### Etat de l'art antérieur

Les microlasers connus ont en général une émission continue de quelques dizaines de mW de puissance. Cependant, la plupart des applications citées ci-dessus, nécessitent des puissances crêtes (puissance instantanée) de quelques kW délivrées pendant 10⁻⁸ à 10⁻⁹ secondes, avec une puissance moyenne de quelques dizaines de mW.

Dans les lasers solides, on peut obtenir de telles puissances crêtes élevées en les faisant fonctionner en mode pulsé à des fréquences variant entre 10 et 10⁴ Hz. Pour cela, on utilise des procédés de déclenchement de la cavité.

Une cavité peut être déclenchée de manière active ou passive.

Dans le cas du déclenchement passif des pertes variables sont introduites dans la cavité sous forme d'un matériau absorbant saturable.

Dans le cas d'un déclenchement actif, la valeur des pertes est pilotée de façon externe par l'utilisateur, par exemple par un miroir de cavité tournant, par des moyens acousto-optiques ou électro-optiques intracavité changeant soit le trajet du faisceau, soit son état de polarisation. La durée de stockage, l'instant d'ouverture de la cavité ainsi que le taux de répétition peuvent être choisis indépendamment.

Les documents US-A-5 132 977 et US-A-4 982 405 décrivent des cavités laser déclenchées activement.

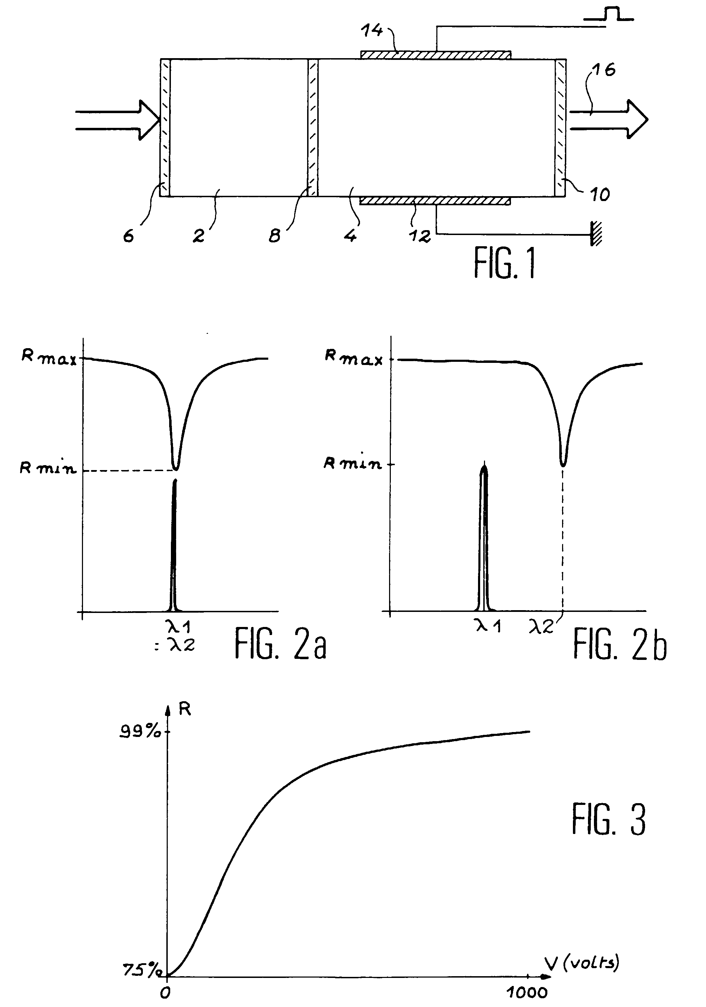

Dans ces documents, le déclenchement est réalisé dans une configuration de deux cavités Fabry-Perot couplées avec des faces planes. Un tel ensemble est illustré sur la figure 1, où la référence 2 désigne le milieu actif laser et la référence 4 un matériau déclencheur, par exemple un matériau électro-optique tel que LiTaO₃. Le milieu actif 2 du laser forme, avec un miroir d'entrée 6 et un miroir intermédiaire 8 une première cavité Fabry-Perot. Le matériau déclencheur forme, avec le miroir intermédiaire 8 et le miroir de sortie 10, une deuxième cavité Fabry-Perot. Le matériau déclencheur 4 peut être par exemple collé à la surface du miroir intermédiaire 8. Les deux cavités sont couplées. Le déclenchement se fait en modifiant la longueur optique du matériau déclencheur 4 par une action externe. Si l'on appelle L₁, n₁, λ₁ (L₂, n₂ λ₂) les longueurs, indices optiques et longueurs d'onde optique de résonance de la première cavité (de la deuxième cavité), il existe la relation : m₁λ₁=2n₁L₁ et m₂λ₂=2n₂L₂ avec m₁ et m₂ nombres entiers.

Si le matériau 4 est un matériau électro-optique, des électrodes de déclenchement 12, 14 sont placées perpendiculairement à l'axe du faisceau laser 16 de part et d'autre du matériau déclencheur 4. Si une tension V est appliquée entre ces électrodes, un champ électrique E=V/e, où e est la distance entre les électrodes (ce qui correspond à l'épaisseur du matériau électro-optique) en résulte. L'indice optique n₂, et par conséquent la longueur optique n₂L₂, du matériau électro-optique est modifié par l'action du champ E. Ceci affecte le couplage des deux cavités et modifie la réflectivité du miroir intermédiaire 8 vu par le milieu laser. En effet, si les longueurs d'onde de résonance des deux cavités coïncident (λ₁=λ₂ ou n₁L₁/n₂L₂=m₁/m₂) la réflectivité de la deuxième cavité (électro-optique) vue par la première cavité (matériau laser) sera minimum et il n'y aura pas d'action laser. Ainsi, en agissant sur le champ E, on peut modifier les conditions de résonance du microlaser, dont la réflectivité de la deuxième cavité et ainsi on peut réaliser le déclenchement actif.

Les deux états correspondant à une réflectivité minimum ou à une réflectivité maximum de la deuxième cavité sont illustrés sur les figures 2a et 2b. Sur ces figures, la courbe dans la partie supérieure donne la réflectivité de la deuxième cavité en fonction de la longueur d'onde, la raie laser étant représentée dans la partie inférieure. La figure 2a correspond au cas où la réflectivité de la deuxième cavité est à sa valeur minimum Rₘᵢₙ, à la longueur d'onde de résonance de la première cavité λ₁. La figure 2b correspond au cas où les longueurs d'onde de résonance des deux cavités ne sont plus identiques (λ₁≠λ₂) et où la deuxième cavité présente une réflectivité maximum Rₘₐₓ à la longueur d'onde λ₁.

Tout ceci s'applique en particulier aux microlasers déclenchés activement, tels que par exemple décrits par Zayhowski et al. dans "Diode-pumped microchip lasers electro-optically Q-switched at high pulse repetition rales" paru dans Optics Letters, vol. 17, pp. 1201-1203 (1992).

Pour un microlaser YAG:Nd émettant vers 1,06 µm constitué par du LiTaO₃ d'épaisseur environ égale à 1 mm, on a : n₁=1,8, n₂=2, L₁=500 µm, L₂=900µm la variation maximum de réflectivité de la deuxième cavité est obtenue pour dλ/λ=dL₂/L₂=dn₂/n₂=10⁻⁴ environ. Cette variation d'indice peut être obtenue en appliquant un champ électrique de 10⁴ volts/cm environ dans le matériau déclencheur. Il est possible d'assimiler la deuxième cavité (électro-optique) à un miroir de sortie de la première cavité constituée du matériau laser. La réflectivité de ce miroir de sortie est variable et commandée par la tension de commande externe appliquée aux électrodes 12, 14. La figure 3 montre la variation de la réflectivité R de la deuxième cavité en fonction de la tension V appliquée. Pour le cas où les trois miroirs 6, 8, 10 ont des réflectivités respectivement égales à 99%, 95% et 50%, la réflectivité de la deuxième cavité va varier entre 75% et 99%. Ainsi, pour le milieu actif ceci revient à faire varier la réflectivité du miroir de sortie entre 75% et 99%, par une commande de tension externe. En fait, on voit d'après le diagramme de la figure 3 qu'il faut appliquer plusieurs centaines de volts pour obtenir une réflectivité voisine de 90% et qu'il faut appliquer environ 1000 volts pour obtenir une réflectivité de l'ordre de 99%, et ceci pour une distance inter-électrodes de 1mm.

Ce type de microlasers présente des problèmes qui en empêchent l'utilisation en pratique.

Tout d'abord, le microlaser est fabriqué par un procédé manuel (il met en oeuvre des étapes de collage de morceaux prédécoupés). Ceci impose une limite inférieure pour les dimensions géométriques qui sont au minimum autour de 1mm, et en particulier pour la distance entre les deux électrodes. En outre, un autre problème est la nécessité d'atteindre un champ E suffisant pour le déclenchement. Il est en effet nécessaire d'appliquer une tension de l'ordre de 1000 volts entre les deux électrodes, et ceci en un temps très court (moins de 1 nanoseconde). Ceci est très difficile à réaliser en pratique et nécessite une électronique sophistiquée incompatible avec la simplicité et le bas coût de production du microlaser.

L'invention a pour objet de résoudre le problème de la tension élevée à appliquer entre les électrodes tout en permettant de diminuer le seuil laser et ceci à l'aide d'une structure pour microlaser mettant en oeuvre des procédés de fabrication collectifs qui permettent à la fois de fabriquer des échantillons de petites tailles et de diminuer les coûts de fabrication, tout en augmentant la fiabilité. Par ailleurs, l'invention permet de réduire encore la taille des microlasers.

### Exposé de l'invention

L'invention a pour objet un microlaser comportant un milieu constitué d'un matériau actif laser constituant une première cavité résonnante avec un miroir d'entrée et un miroir intermédiaire, un second matériau disposé dans une seconde cavité résonnante formée entre le miroir intermédiaire et un miroir de sortie, l'indice optique de ce second matériau étant apte à être modulé par une perturbation extérieure, le microlaser étant caractérisé en outre en ce que des moyens de réduction de la taille d'un faisceau laser sont disposés en entrée de la première cavité résonnante, l'ensemble des deux cavités et des moyens de réduction du faisceau laser étant monolithique.

Selon un mode particulier de réalisation, les moyens de réduction sont constitués par un micromiroir concave réalisé à la surface du milieu actif laser.

Selon un autre mode de réalisation, le miroir de sortie de la deuxième cavité peut être un micromiroir concave réalisé sur la face de sortie du second matériau.

Dans l'un ou l'autre cas, on pourra calculer les rayons de courbure des miroirs de façon à obtenir une cavité stable.

Le second matériau peut être par exemple un matériau électro-optique. Ce peut être aussi un matériau magnéto-optique. Ce peut être également un matériau non linéaire, dont l'indice varie en fonction de l'intensité d'un faisceau laser incident dirigé sur ce matériau.

Avec une telle structure, il est possible de ramener l'épaisseur du second matériau à environ 100 µm. Ceci permet, dans le cas d'un matériau électro-optique de limiter la tension nécessaire à une valeur comprise entre 50 et 100 volts. Par ailleurs, le seuil de déclenchement du laser est réduit à environ quelques mW.

### Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :
- la figure 1 représente un microlaser déclenché par un matériau électro-optique, selon l'art antérieur,
- les figures 2a et 2b représentent, pour un dispositif selon l'art antérieur, les positions relatives de la raie laser et d'un mode de la cavité constituée par le matériau déclencheur,
- la figure 3 représente la réflectivité de la deuxième cavité vue par le milieu actif laser de la première cavité dans un microlaser déclenché selon l'art antérieur,
- la figure 4 est un exemple de réalisation d'un microlaser selon l'invention,
- la figure 5 est un autre exemple de réalisation d'un microlaser selon l'invention,
- les figures 6a à 6e illustrent des étapes d'un procédé de réalisation de micromiroirs pour un microlaser selon l'invention,
- les figures 7a à 7c illustrent des étapes de réalisation d'une puce microlaser,
- la figure 8 est un autre mode de réalisation du microlaser selon l'invention,

### Description détaillée de modes de réalisation de l'invention

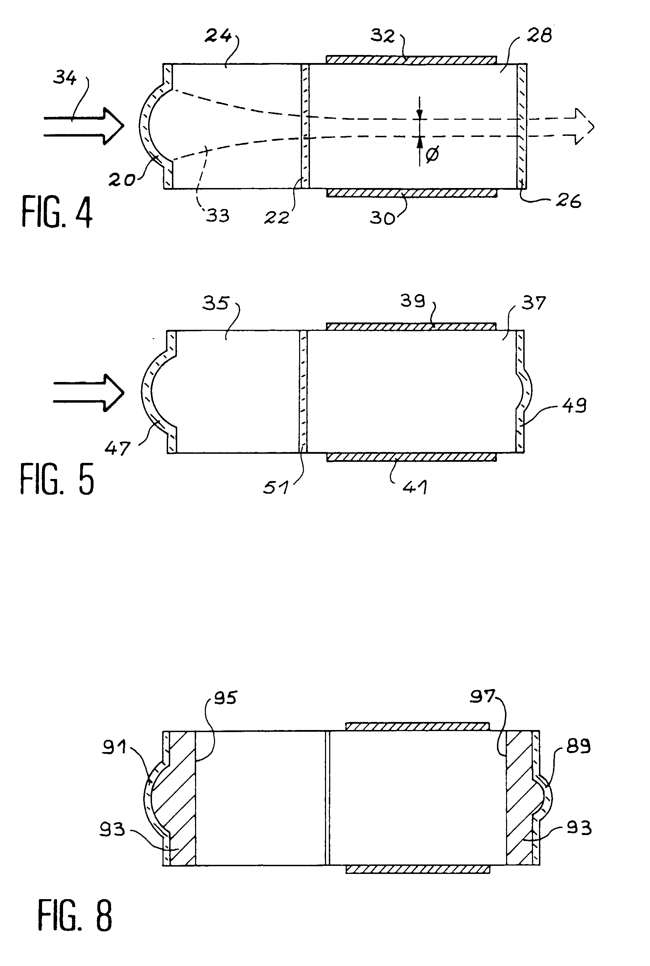

Un premier mode de réalisation de l'invention sera décrit en liaison avec la figure 4. Sur cette figure, la référence 24 désigne un milieu actif laser, tel que par exemple un milieu YAG dopé au néodyme (Nd). Ce milieu est compris entre un miroir d'entrée 20 et un miroir intermédiaire 22 avec lesquels il constitue une première cavité résonnante. Une seconde cavité résonnante est constituée par le miroir intermédiaire 22, un miroir de sortie 26 et un matériau 28, ce dernier possédant un indice susceptible de varier en fonction d'une perturbation extérieure. Ce peut être par exemple un matériau électro-optique, tel que du LiTaO₃ auquel on applique, comme illustré sur la figure 4, une différence de potentiel à l'aide de deux électrodes de contact 30, 32. Plus généralement, on dispose de moyens pour faire varier ou moduler l'indice de réfraction du matériau 28. On désigne par e l'épaisseur de ce second matériau 28. Un faisceau de pompage 34 est dirigé sur le miroir d'entrée 20. Ce peut être, dans le cas où le matériau 24 est du YAG dopé au néodyme, un faisceau de pompage à 808nm. Des moyens de pompage sont prévus, non représentés sur la figure, par exemple une diode laser.

A l'entrée de la première cavité constituée par les éléments 20, 22, 24, sont prévus des moyens de réduction de la taille du faisceau laser 33. Ces moyens de réduction de la taille du faisceau laser et l'ensemble des deux cavités résonnantes sont monolithiques. Ainsi, on peut réaliser un micromiroir 20 sur la face du matériau laser 24 qui est destinée à être traversée en premier par le faisceau de pompage 34. Le rayon de courbure de ce micromiroir sera de préférence supérieur à la longueur totale du laser (longueur L₁ du milieu actif 24 + longueur L₂ du milieu 28). Typiquement, le rayon de courbure sera supérieur à environ 1,5 mm. Avec une telle condition, il est possible de réaliser une cavité stable optiquement. On obtient ainsi un diamètre Φ du faisceau laser 33, à l'intérieur du milieu 28, qui est petit, typiquement de quelques dizaines de micromètres (contre environ 120µm dans l'art antérieur). Il est donc possible de ramener l'épaisseur e de ce milieu 28 à des dimensions plus faibles que dans l'art antérieur ; ces dimensions sont typiquement comprises entre 100 et 500 µm, contre 1 mm pour l'art antérieur.

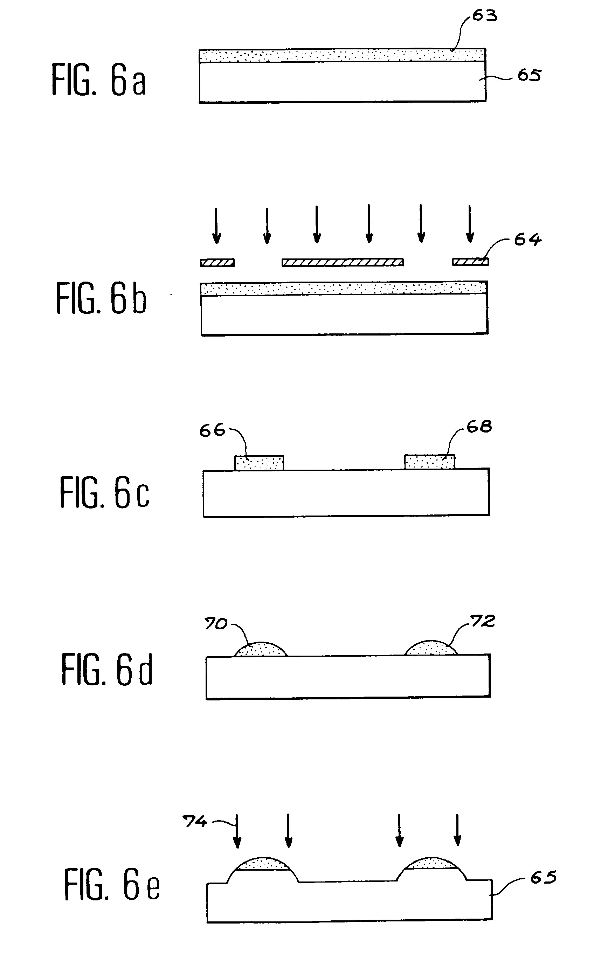

Il est également possible de réaliser, comme illustré sur la figure 5, une structure dans laquelle un micromiroir 47 est réalisé en entrée de la première cavité et un micromiroir 49 est réalisé en sortie de la deuxième cavité. La référence 51 désigne un miroir intermédiaire. Sur cette figure, les milieux 35 et 37 ont des fonctions identiques aux milieux 24 et 28 de la figure 4 : le matériau 35 de longueur L₁ est un matériau laser et le matériau 37 est par exemple un matériau électro-optique de longueur L₂. Ce dernier est compris entre deux électrodes de contact 39 et 41. Les rayons de courbure R₁ et R₂ de chacun des micromiroirs 47, 49 sont choisis de façon à obtenir deux cavités stables optiquement. Dans le cas de deux cavités couplées, on doit donc avoir R₁>L₁ et R₂>L₂ pour satisfaire à cette condition. Le cas de la cavité plan concave de la figure 4 décrite ci-dessus correspond à R₂=∞.

Tous les matériaux électro-optiques ou semi-conducteurs connus peuvent être choisis pour réaliser le matériau d'indice optique variable.

On peut également utiliser, comme milieu d'indice n₂, un matériau dont on peut faire varier l'indice par pompage au moyen d'une seconde source de lumière (la première étant la source de pompage du milieu actif laser). La valeur de l'indice n₂ est modulée par le second faisceau laser. Si le second faisceau de pompage est le faisceau laser lui-même, on obtient un système laser autodéclenché. De tels matériaux sont décrits dans l'ouvrage intitulé "Handbook of laser science and technology", vol. 3, part 1, section 1, CRC Press, 1986.

Il est également possible d'utiliser, comme milieu d'indice n₂, un matériau magnéto-optique dont l'indice n₂ est modifié en réponse à un champ magnétique externe. Par exemple, on peut utiliser, pour changer l'indice n₂, un électroaimant situé à proximité du matériau d'indice n₂. Des matériaux ayant cette propriété sont décrits dans l'ouvrage "Handbook of laser science and technology", vol. 4, part 2, section 2, CRC Press, 1986.

Il est également possible de choisir des matériaux dont l'indice sera fonction de variations de températures ou de variations de pressions imposées à l'extérieur.

Selon une variante, il est possible de modifier l'indice n₁ du milieu laser par des moyens thermiques, électriques ou magnétiques. En effet, certains matériaux utilisés comme matrice pour le milieu actif laser, comme le YAG, présentent par exemple des propriétés électro-optiques.

Par ailleurs, il est possible d'inverser la position des deux matériaux, le matériau de déclenchement étant alors positionné en premier sur le trajet du faisceau pompe devant le milieu actif laser.

Le fait d'utiliser des moyens de focalisation en entrée des deux cavités, l'ensemble étant monolithique, permet de concentrer le faisceau laser à l'intérieur du matériau électro-optique. La section du faisceau laser étant diminuée, il est possible de diminuer l'épaisseur du matériau d'indice n₂, donc la distance nécessaire entre les électrodes de contact (référencées 30, 32 sur la figure 4 et 39, 41 sur la figure 5) pour obtenir le champ E nécessaire à la modulation de l'indice n₂. La tension à appliquer aux électrodes pour obtenir le même champ E s'en trouve diminuée d'autant.

Par ailleurs, une variation relative de n₂ de l'ordre de 10⁻⁴ suffit pour obtenir une variation maximum de la réflectivité de la deuxième cavité vue par la première cavité.

Au cas où il serait difficile d'ajuster les épaisseurs L₁ et L₂ avec une précision de 10⁻⁴ (soit un contrôle d'épaisseur de 0,1 µm dans le cas des microlasers), il faut ajuster ces longueurs avant le déclenchement, avec des moyens prévus à cet effet, par exemple par application d'un champ électrique continu, ou en régulant la température ou par tout autre moyen mécanique (effet piézoélectrique par exemple). Cet ajustement de la longueur permettra de définir l'état "off" du microlaser, en ajustant par exemple la cavité sur un état de réflectivité minimum (λ₁=λ₂ : figure 2a). A partir de cet état initial, il suffit dans le cas où le second matériau est du type électrooptique, d'appliquer une impulsion rapide de champ électrique pour moduler rapidement n₂, de façon à augmenter la réflectivité (λ₁≠λ₂ : figure 2b) et pour obtenir une impulsion laser ou d'une façon générale, d'appliquer une impulsion rapide à l'aide des moyens pour varier ou moduler l'indice de réfraction.

Un procédé de fabrication d'un microlaser selon la présente invention, comportant un milieu actif laser et un matériau électrooptique, va maintenant être décrit. Ce procédé comporte des étapes numérotées 1°) à 15°) :
1°) - Dans une première étape, on procède au calcul des rayons de courbure R₁ et R₂, si la stabilité d'une ou des cavités est souhaitée.
2°) - Dans une deuxième étape, on procède au découpage et au polissage double face d'une lame de matériau laser et d'une lame du second matériau d'indice variable, tel qu'un matériau électro-optique (par exemple LiTaO₃),
3°) - On fabrique ensuite par photolithographie et usinage, un micromiroir sur la face d'entrée du matériau laser (diamètre typique 100 à 500µm, et rayon de courbure R₁ de 1 à 2 mm). Cette étape est illustrée sur les figures 6a à 6e. Dans une première sous-étape (figure 6a), il est procédé au dépôt d'une couche 63 de résine photosensible sur la face d'entrée du matériau laser 65. Puis il est procédé à l'insolation de la résine à travers un masque 64 à l'aide d'un rayonnement UV (figure 6b). L'étape suivante (figure 6c) est une étape de révélation chimique de la résine, ne laissant subsister que des plots 66, 68 destinés à former les micromiroirs. Il est ensuite procédé au fluage thermique de la résine (figure 6d) pour former les micromiroirs 70, 72 en résine, et à l'usinage du matériau laser 65 à l'aide d'un faisceau d'ions 74 (figure 6e).

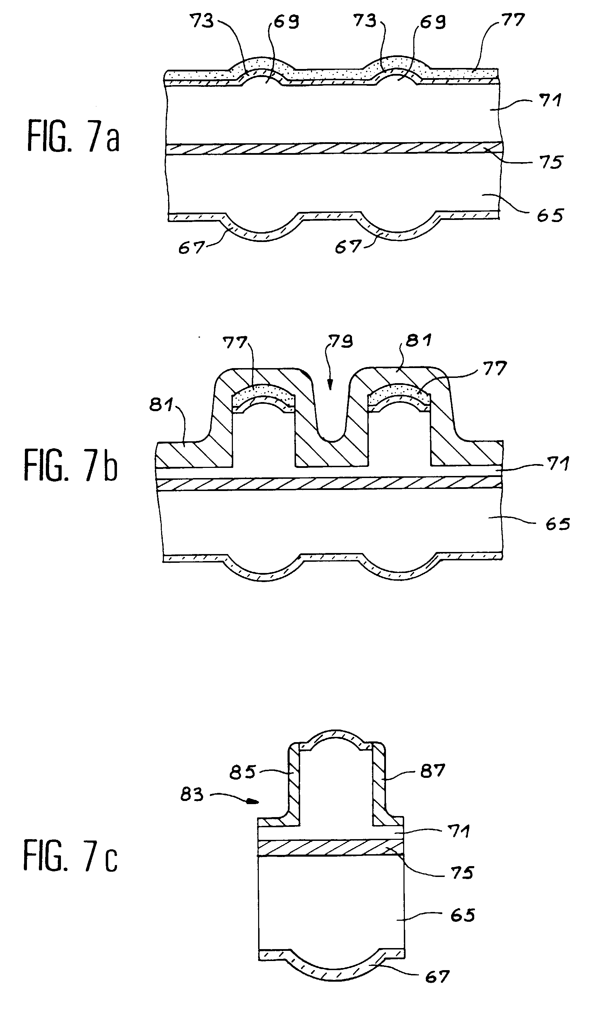

Les étapes 4°) à 9°) sont ensuite décrites en liaison avec la figure 7a.
4°) - Il est procédé au dépôt du miroir d'entrée 67 sur la face d'entrée du matériau laser 65 (par exemple, pour le miroir d'entrée dichroïque, avec une réflectivité supérieure à 99,5% à la longueur d'onde du faisceau laser, et une transmission supérieure à 80% à la longueur d'onde du faisceau de pompage).
5°) - Puis il est procédé à la fabrication, par photolithographie et usinage, de microbossages 69 sur la surface de sortie du matériau électro-optique 71 (diamètre typique 100 à 500 µm et rayon de courbure R₂ de 1 à 2 mm). Dans le cas où le miroir de sortie est un miroir plan, il n'est pas procédé à la formation de microbossages sur la face de sortie du matériau électro-optique. Par ailleurs, le diamètre du miroir (microlentille) de sortie peut être inférieur au diamètre du micromiroir d'entrée.
6°) - On procède ensuite au dépôt du micromiroir de sortie 73 sur la face de sortie du matériau électro-optique 71 (miroir de sortie avec une réflectivité typique de 85 à 99% à la longueur d'onde du faisceau laser et éventuellement avec une réflectivité supérieure à la longueur d'onde du faisceau de pompage pour réfléchir le faisceau de pompe qui n'est pas totalement absorbé au premier passage).
7°) - Dans la septième étape, un miroir intermédiaire 75 est déposé à l'interface matériau laser 65-matériau électro-optique 71.
8°) - Les deux lames et le miroir 75 sont ensuite collés à l'aide d'une colle optique.
9°) - Il est possible de protéger la face de sortie par un dépôt de résine 77.
10°) - Il est possible de réaliser des rainures 79 (figure 7b) dans le matériau électro-optique à l'aide d'une scie à lame diamantée utilisée en microélectronique, pour pouvoir réaliser par la suite les électrodes avec l'espacement voulu (de l'ordre de 100 µm, par rapport à une distance interélectrode de 1mm dans l'art antérieur).
11°) - Il est ensuite procédé au dépôt de contacts électriques par évaporation (par exemple, dépôt d'une couche Cr-Au 81 qui enrobe la résine 77 et le matériau électrooptique 71).
12°) - Il y a ensuite décapage chimique de la résine de protection (figure 7c).
13°) - Des puces élémentaires 83, de taille sensiblement égale à 1mm² sont ensuite découpées comme illustré sur la figure 7c où les références 85, 87 désignent les électrodes de commande du matériau électrooptique 71.
14°) - Les puces sont montées sur un support de circuit imprimé métallisé et adapté en impédance, avec prise de contact électrique et montage dans un boîtier blindé.
15°) - Il peut ensuite être procédé au montage en boîtier et à la connexion avec une diode laser de pompe et un connecteur électrique pour le déclenchement.

Selon une variante, il est possible de fabriquer les micromiroirs avec un masque à densité variable. Par ailleurs, comme illustré sur la figure 8, des micromiroirs 89, 91 peuvent être réalisés sur un matériau 93 comme le verre ou la silice, transparent à la longueur d'onde du laser. Ces substrats avec les micromiroirs peuvent ensuite être accolés sur les faces d'entrée 95 et de sortie 97 du microlaser. La structure obtenue est illustrée sur la figure 8.

Par ailleurs, tous types de matériaux laser solides (cristaux ou verres) connus peuvent être utilisés. En particulier la longueur d'onde sera déterminée en fonction des ions actifs : autour de 1µm pour Nd et Yb, autour de 1,55µm pour Er et Er+Yb et autour de 2µm pour Tm et Ho. Les caractéristiques spectrales des miroirs seront choisies d'une part en fonction des longueurs d'onde, d'autre part en fonction des caractéristiques de déclenchement du microlaser. Dans le cas où le second matériau, d'indice n₂, est un matériau électrooptique, tous les matériaux électro-optiques ou semi-conducteurs connus, permettant d'obtenir la variation de la longueur optique par une tension de commande peuvent être utilisés pour réaliser la deuxième cavité. Ces matériaux seront choisis en fonction de la longueur d'onde et en fonction de leurs propriétés électro-optiques. Par ailleurs, comme on l'a déjà vu ci-dessus, on peut également choisir des matériaux dont l'indice varie en fonction d'un champ magnétique ou en réponse à un faisceau laser incident, ou en réponse à une variation de température ou de pression.

L'invention permet de diminuer la taille du milieu d'indice variable n₂, ce qui permet de réduire ou non la taille du microlaser. Dans le cas d'un matériau électrooptique, la distance inter-électrodes peut être ramenée à 100 µm, par rapport à environ 1 mm selon l'art antérieur. Une tension de commutation beaucoup moins importante est donc nécessaire. De plus, le microlaser est monolithique et peut être fabriqué par des techniques collectives du type de celles mises en oeuvre en microélectronique et qui permettent de réaliser des dispositifs microlasers à bas coût.

## Revendications

1. Microlaser comportant un milieu constitué d'un matériau actif laser (24, 35, 65), formant une première cavité résonnante entre un miroir d'entrée (20, 47, 67) et un miroir intermédiaire (22, 51, 75), un second matériau (28, 37, 71) formant une seconde cavité résonnante entre le miroir intermédiaire et un miroir de sortie (26, 49, 73), l'indice optique de ce second matériau étant apte à être modulé par une perturbation extérieure, caractérisé en ce que des moyens (20, 47) de réduction de la taille du faisceau laser sont disposés en entrée de la première cavité résonante, l'ensemble des deux cavités et des moyens de réduction du faisceau laser étant monolithiques.

2. Microlaser selon la revendication 1, les moyens de réduction étant constitués par un miroir concave réalisé avec un micromiroir (20, 47) sur la face du milieu actif laser (24, 35) destinée à être traversée par le faisceau de pompage.

3. Microlaser selon l'une des revendications 1 ou 2, le miroir de sortie étant un miroir concave réalisé avec un micromiroir (49, 73) sur la face de sortie du second matériau.

4. Microlaser selon l'une des revendications 1, 2 ou 3, la ou les cavités étant optiquement stables.

5. Microlaser selon l'une des revendications précédentes, le second matériau étant un matériau électro-optique ou magnéto-optique ou à indice optiquement variable.
